# EUROPÄISCHE PATENTSCHRIFT

(11) **EP 3 558 691 B1**
(45) Veröffentlichungstag und Bekanntmachung des Hinweises auf die Patenterteilung: **12.05.2021**
(21) Anmeldenummer: 17804811.2
(22) Anmeldetag: 28.11.2017
(51) Int. Cl.: B42D 25/328, G02B 5/18, G07D 7/00, G07D 7/12

(54) **HOLOGRAPHISCHES SICHERHEITSELEMENT UND VERFAHREN ZU DESSEN HERSTELLUNG**
HOLOGRAPHIC SECURITY ELEMENT AND METHOD FOR THE PRODUCTION THEREOF
ÉLÉMENT DE SÉCURITÉ HOLOGRAPHIQUE ET SON PROCÉDÉ DE FABRICATION

(30) Priorität: 21.12.2016 DE 102016015335
(43) Veröffentlichungstag der Anmeldung: 30.10.2019
(73) Patentinhaber: Giesecke+Devrient Currency Technology GmbH, 81677 München (DE)
(72) Erfinder: LOCHBIHLER, Hans, 80337 München (DE); RAHM, Michael, 83646 Bad Tölz (DE); SCHERER, Maik Rudolf Johann, 82491 Grainau (DE)
(86) Internationale Anmeldenummer: PCT/EP2017/001384
(87) Internationale Veröffentlichungsnummer: WO 2018/114034

(56) Entgegenhaltungen:
- EP-A1- 2 336 810
- WO-A1-94/28444
- WO-A1-2014/012667
- DE-A1-102012 025 266

## Beschreibung

Die Erfindung betrifft ein holographisches Sicherheitselement und Verfahren zu dessen Herstellung.

Prägehologramme, wie sie z. B. aus E.G. Loewen, E. Popov, Diffraction Gratings and Applications, Marcel Dekker, New York, 1997, und US 7129028 B2 bekannt sind, sind als Sicherheitsmerkmale auf Banknoten, Karten für den Zahlungsverkehr und im Markenschutz sehr weit verbreitet. Sie bestehen in der Regel aus einer Prägestruktur, die Hologrammgitterstrukturen in der Form von Beugungsgittern mit unterschiedlichen Perioden und Orientierungen der Azimutwinkel beinhaltet. Ein Betrachter nimmt den Hologrammeffekt in der ersten Beugungsordnung der Reflexion im Rekonstruktionswinkel des Hologramms wahr. Die Beugung in die erste Beugungsordnung wird von einem Betrachter als Farbe wahrgenommen. Farbige Motive, welche beispielsweise durch Hologrammgitterstrukturen in Form von Aluminium bedampften Sinusgittern realisiert sind, sind daher nur unter einem bestimmten Betrachtungswinkel wahrnehmbar. Die Reflexion im Glanzwinkel ist relativ kontrastarm. Das Prägehologramm erscheint im Glanzwinkel der Reflexion unbunt und ist im Durchlicht dunkel.

Echtfarbenbilder können durch eine Anordnung von Pixeln wiedergegeben werden, in denen sich jeweils drei verschiedene Gitter als Subpixel befinden. Dies ist z.B. aus der WO 94/28444 A1 bekannt, die es zudem offenbart, auch weitere Subpixel für u. a. einen zero-order-diffraction-Effekt vorzusehen. Diese drei Gitter korrespondieren zu Grundfarben, meist Rot, Grün und Blau. Die Einstellung einer gewünschten Farbe in einem Pixel erfolgt über die Farbmischung der Grundfarben durch den entsprechenden Flächenanteil der Subpixel. Die Intensität der Farbe wird über die Größe des mit holographischen Strukturen belegten Flächeninhalts des Pixels reguliert: Ist die Fläche des Pixels vollständig mit Gittern gefüllt, erscheinen die Farben in maximaler Brillanz. Bleiben Teilbereiche leer, so sind die Farben entsprechend blasser. Das Motiv ist im Glanzwinkel nur sehr schwach als hell reflektierende, leicht in der Intensität modulierte Fläche zu erkennen. Nachteilig ist insbesondere bei Echtfarbenhologrammen, dass das Motiv in der ersten Beugungsordnung nur in einem engen Winkeltoleranzbereich in den Echtfarben zu erkennen ist. Dieser Nachteil wirkt sich insbesondere bei der Betrachtung unter ungünstigen Lichtverhältnissen aus. Zudem erscheint beim Kippen aus dem Rekonstruktionswinkel das Echtfarbenbild schnell in "Falschfarben". Als besonders kritisch wird empfunden, dass das Bild bei Betrachtung im Glanzwinkel ins Negativ übergehen kann, weil dann die nicht mit Strukturen gefüllten Flächenanteile das einfallende Licht ins Auge des Betrachters lenken und deshalb hell aufleuchten können.

Weiter sind Subwellenlängengitter bekannt, welche sich zur Farbgebung in Reflexion und auch in Transmission eignen. Metallische Strukturen, welche farbig im Glanzwinkel erscheinen und sich zusätzlich kostengünstig auf Folie prägen lassen, sind in den Schriften WO 2013/053435 A1, DE 102011101635 A1 und DE 102015008655 A1 und WO 2014/012667 A1 erläutert. Hier kann es sich sowohl um eindimensional als auch um zweidimensional periodische Strukturen handeln. Solche Subwellenlängengitter eignen sich ebenfalls zur Herstellung von Echtfarbenbildern. Im Gegensatz zu Hologrammgitterstrukturen ist hier das Echtfarbenbild in der nullten Beugungsordnung, also im Glanzwinkel zu erkennen. Subwellenlängengitter können auch so beschaffen sein, dass ein Echtfarbenbild in Transmission gebildet wird. Ein bekanntes Verfahren zur Herstellung solcher Echtfarbenbilder nutzt ebenfalls die pixelweise Anpassung der gewünschten Farbe durch Farbmischung von Grundfarben in Subpixeln, welche zu Subwellenlängengittern unterschiedlicher Profilparameter korrespondieren (vgl. H. Lochbihler, "Colored images generated by metallic sub-wavelength gratings," Opt. Express 17(14), 12189-12196 (2009); WO 2012/019226 A1, EP 2960690 A1 und WO 2014/179892 A1).

Der Erfindung liegt die Aufgabe zugrunde, ein Sicherheitselement bereitzustellen, welches die optischen Eigenschaften von bekannten Prägehologrammen hat und das zusätzlich das Motiv im Glanzwinkel nicht verfälscht, bevorzugt es dort ebenfalls in kontrastreicher Ausgestaltung zeigt.

Die Erfindung ist in den Ansprüchen 1, 12 und 13 definiert. Die abhängigen Ansprüche betreffen vorteilhafte Weiterbildungen.

Die Erfindung verbessert herkömmliche Prägehologramme und erhöht die Erkennbarkeit des Motivs. Das Motiv wird durch eine Vielzahl von Pixeln gebildet, die auf übliche Weise jeweils Hologrammgitterstrukturen, also im optischen Bereich als Beugungsgitter wirkende Strukturen mit unterschiedlichen Gitterperioden bzw. Gitterausrichtungen aufweisen. Eine derartige Erzeugung von Motiven in der ersten Beugungsordnung mittels holographischer Strukturen ist im Stand der Technik bekannt. Exemplarisch wird auf die Veröffentlichung H. Caulfield, "The Art and Science of Holography", SPIE, 2004, ISBN 0-8194-5019-7, und dort beispielsweise auf die Seiten 201 bis 209 verwiesen. Die für ein Pixel gewünschte Farbe wird durch die Farbmischung, z.B. aus drei Grundfarben von zugeordneten Subpixeln gebildet. Die Gesamtgröße eines Pixels ist so, dass sie mit dem bloßen Auge nicht mehr aufgelöst werden kann, beispielsweise nicht über 100 µm in der Größenabmessung. Es ist jedoch auch möglich, diese Größe nur auf eine Dimension des Pixels zu beziehen, beispielsweise wenn die Pixel in Form lang gestreckter schmaler Streifen vorliegen. Können die Pixel überhaupt nicht mit dem bloßen Auge aufgelöst werden, ergibt sich letztlich ein Bild mit einer glatten Intensitätsverteilung. Die Subpixel nehmen nur Teile des Pixels ein, wobei jedes Subpixel einer Grundfarbe zugeordnet ist. Die Mischfarbe ergibt sich über den Flächenanteil der Subpixel relativ zueinander. Die Erzeugung des holographischen Bildes erfolgt dadurch, dass die genannten Subpixel nur einen Teilbereich des gesamten Pixels ausmachen. Ein weiterer Teilbereich des Pixels enthält ein farbgebendes Subwellenlängengitter oder eine sogenannte Mottenaugenstruktur in Form einer periodischen, quasiperiodischen oder aperiodischen Subwellenlängenstruktur, oder eine lichtabsorbierende oder -färbende Mikrostruktur.

Unter einem Pixel wird jede beliebige Flächenform verstanden, die zur Codierung von Bildinformation verwendet wird, u.a. auch L-förmige, runde oder unregelmäßige Geometrien. In der Regel, aber nicht zwingend, ist diese Anordnung regelmäßig, beispielsweise in Form von rechteckigen oder quadratischen Pixeln.

Im Sicherheitselement hat eine Vielzahl, bevorzugt jedes Pixel mindestens zwei Teilbereiche. Ein erster Teilbereich ist von der Hologrammstruktur gebildet und stellt letztlich das holographische Bild bereit, das in der ersten Beugungsordnung sichtbar ist. Ein zweiter Teilbereich ist mit dem Subwellenlängengitter oder der Mottenaugenstruktur oder der lichtabsorbierenden oder -färbenden Mikrostruktur ausgefüllt. Bei Betrachtung im Glanzwinkel erscheint damit die Reflexionsfarbe des Subwellenlängengitters oder der lichtfärbenden Mikrostruktur. Falls die Mikrostruktur lichtabsorbierend ist oder eine Mottenaugenstruktur verwendet wird, erscheint das Pixel im Glanzwinkel dunkel. Auf diese Weise kann bei Betrachtung im Glanzwinkel die Erscheinung des Sicherheitsmerkmals gesteuert werden. Wird das Subwellenlängengitter oder die Mikrostruktur halbtransparent ausgebildet, ist auch eine Farbe in Transmissionsbetrachtung einstellbar. Erfindungsgemäß weisen mindestens einige der Pixel einen dritten Teilbereich auf, der entweder eine rein lichtabsorbierende Struktur oder der glatt und metallisch überzogen ist und dessen Flächenanteil eine Intensitätsanpassung des Pixels im Glanzwinkel und in Transmission bewirkt.

Die Farbe der im zweiten Teilbereich vorgesehenen Struktur in Reflexion (und zusätzlich optional auch im Durchlicht) hängt von der Wahl des Gitterprofils sowie der verwendeten Beschichtung ab. Dies ist aus dem Stand der Technik für Subwellenlängengitter bekannt; gleiches gilt für Mikrostrukturen. Durch die Anpassung des Flächenverhältnisses des zweiten Teilbereichs zum ersten Teilbereich kann für jedes Pixel ein intensitätsabgestuftes Motiv bei Betrachtung im Glanzwinkel erzeugt werden. Ist der zweite Teilbereich jedes Pixels nicht weiter strukturiert, erscheint dieser Bereich einfarbig.

In einer Ausführungsvariante ist der zweite Teilbereich in unterschiedlich farbige Subpixel unterteilt, so dass im Glanzwinkel der Reflexion auch ein Echtfarbenbild realisiert ist. Bevorzugt sind drei verschiedene Subpixel vorgesehen, welche Grundfarben, beispielsweise Rot, Grün und Blau, für einen vordefinierten Betrachtungswinkel zugeordnet sind. Die gewünschte Farbe, die der zweite Teilbereich bei Betrachtung im Glanzwinkel (und optional auch in Durchsicht) erzeugt, wird für jedes Pixel über den relativen Flächenanteil der drei Subpixel eingestellt. Der Betrachter nimmt dann für jedes Pixel die Mischfarbe der Subpixel wahr.

In einer weiteren bevorzugten Ausführungsvariante wird zunächst das in der ersten Beugungsordnung erscheinende Echtfarbenhologramm berechnet, insbesondere die Einteilung in Pixel und Subpixel. Anschließend werden die bisher nicht benötigten Flächenbereiche, denen die Funktion der zweiten Teilbereiche zukommt, mit den Mikro- oder Subwellenlängenstrukturen gefüllt. Die Einteilung der zweiten Teilbereiche in Pixel und gegebenenfalls Subpixel kann bei dieser Variante unabhängig von der Pixel- und Subpixeleinteilung der ersten Teilbereiche erfolgen. In einer besonders bevorzugten Ausgestaltung dienen die Prägestrukturen in den zweiten Teilbereichen der Lichtabsorption, wobei sie die zweiten Teilbereiche vollflächig oder teilweise füllen können.

Die Erfindung wird nachfolgend unter Bezugnahme auf die Zeichnungen in Ausführungsbeispielen exemplarisch näher erläutert. In den Zeichnungen zeigt:
- Fig. 1: eine Schemadarstellung einer Banknote mit einem Sicherheitselement, das in einer ersten Beugungsordnung ein Bild als Hologramm und bei einer Betrachtung im Glanzwinkel dasselbe Bild zeigt,
- Fig. 2: eine Schemadarstellung des Bildes, das im Sicherheitsmerkmal der Fig. 1 zu sehen ist, zur Veranschaulichung einer Pixelstruktur, aus welcher das Bild aufgebaut ist,
- Fig. 3 bis 5: verschiedene Varianten zum Aufbau des Pixels aus Subpixeln, wobei jedes Pixel zumindest einen ersten Teilbereich, in dem eine Hologrammgitterstruktur besteht, und einen zweiten Teilbereich, in dem eine Subwellenlängengitterstruktur ausgebildet ist, aufweist,
- Fig. 6 und 7: exemplarische Schnittdarstellungen durch ein Pixel zur Verdeutlichung der unterschiedlichen Bereiche,
- Fig. 8 und 9: schematische Schnittdarstellungen zur Verdeutlichung der Funktionsweise der Gitterstrukturen in den beiden Teilbereichen und
- Fig. 10: eine Draufsicht auf ein weiteres Sicherheitselement mit streifenförmigen Pixeln.

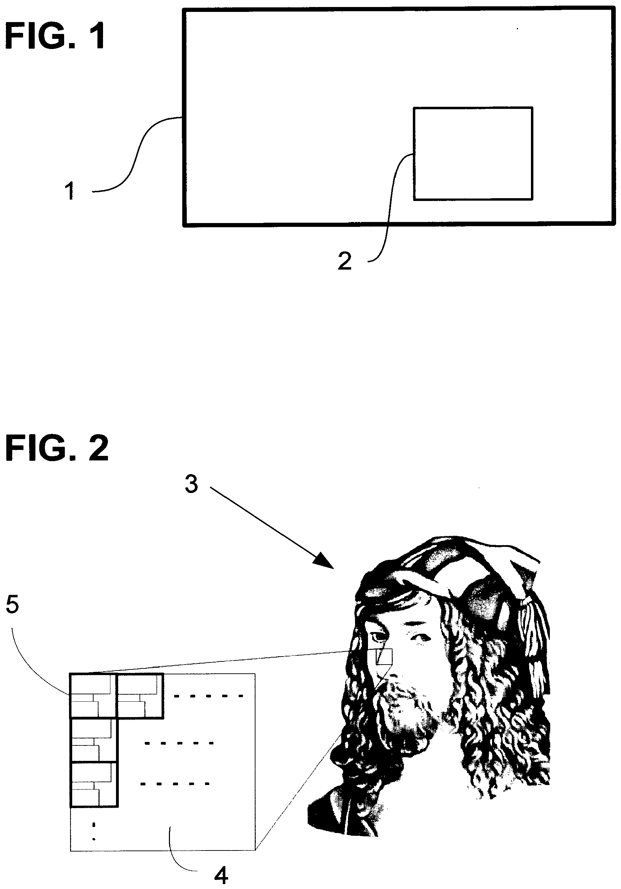

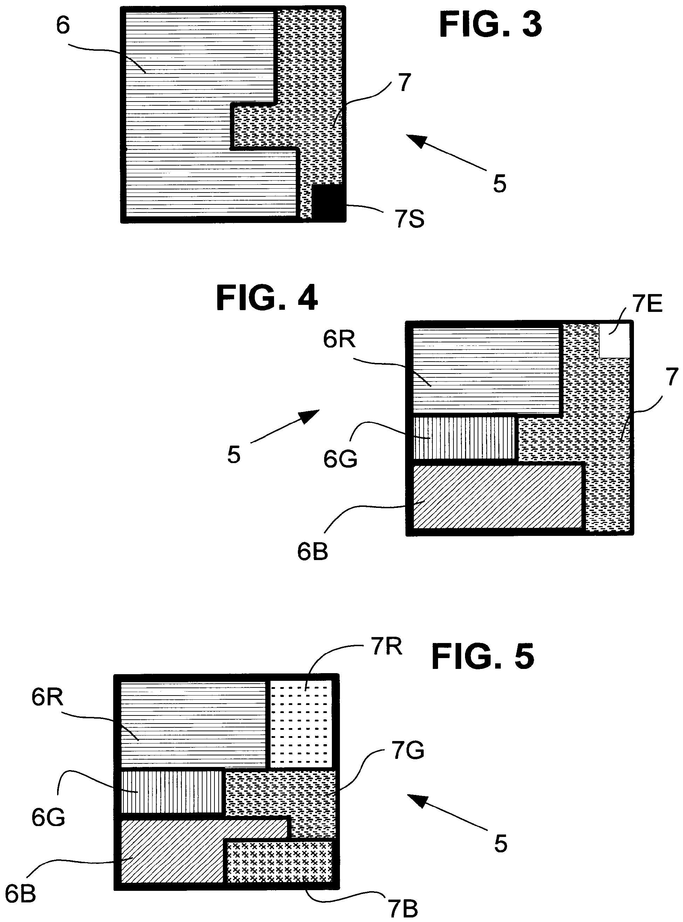

Fig. 1 zeigt in Draufsicht schematisch eine Banknote 1, die zur Erhöhung der Fälschungssicherheit ein Sicherheitselement 2 hat. Das Sicherheitselement 2 enthält ein Prägehologramm, das ein Motiv 3 erzeugt, hier ein Bild von Dürer (vgl. Fig. 2). In Fig. 2 ist ein Ausschnitt 4 des Motivs 3 dargestellt um zu verdeutlichen, dass das Bild 3 aus einer Vielzahl von Pixeln 5 aufgebaut ist. Jedes Pixel 5 besteht aus Teilbereichen. Die Fig. 3 bis 5 zeigen verschiedene Ausführungsformen für diese Aufteilung. In Fig. 3 hat jedes Pixel 5 einen ersten Teilbereich 6, einen zweiten Teilbereich 7 und einen dritten Teilbereich 7S. Im ersten Teilbereich ist die Hologrammgitterstruktur ausgebildet, die erforderlich ist, um das Motiv 3 als Hologramm in der ersten Beugungsordnung sichtbar zu machen. Ein zweiter Teilbereich 7 des Pixels 5 verfügt über eine Subwellenlängengitterstruktur oder Mikrostruktur, die dasselbe oder ein anderes Motiv im Glanzwinkel (und optional auch in Transmission) erkennbar macht. Die Hologrammgitterstruktur im ersten Teilbereich 6 stellt über ihre Fläche den Helligkeitswert für das entsprechende Pixel 5 in der ersten Beugungsordnung ein. Die Struktur im zweiten Teilbereich 7 bewirkt dasselbe bei der Betrachtung im Glanzwinkel. In Fig. 3 ist die Struktur in dem dritten Teilbereich 7S rein lichtabsorbierend, z.B. als Mottenaugenstruktur ausgebildet. Auf diese Weise kann das Helligkeitsverhältnis bzw. Intensitätsverhältnis zusätzlich zur Aufteilung von erstem und zweitem Teilbereich eingestellt werden. Der dritte Teilbereich kann alternativ auch einen glatten Bereich enthalten, der metallisch überzogen und opak ist. Auch dieser bewirkt eine Intensitätsanpassung in den einzelnen Pixeln 5. Natürlich kann im zweiten Teilbereich auch nur eine lichtabsorbierende Mikrostruktur oder Mottenaugenstruktur verwendet werden. Das verhindert ein Umschlagen des Bildes ins Negative, wenn man das Sicherheitselement vom Winkel der ersten Beugungsordnung in den Glanzwinkel kippt.

Fig. 4 zeigt eine Ausgestaltung für die Pixel 5, die ein Echtfarbenbild in der ersten Beugungsordnung erzeugt, indem der Teilbereich 6 in Subpixel 6R, 6G und 6B unterteilt ist, die den Grundfarben Rot, Grün und Blau zugeordnet sind. Das Flächenverhältnis der Subpixel stellt die Mischfarbe ein. Für die verbleibende Fläche des Pixels 7 gilt wiederum, dass eine Subwellenlängengitterstruktur vorgesehen ist. Ein dritter Teilbereich 7E ist vorgesehen, der als glatte Schicht, wie gerade erwähnt, ausgebildet ist.

Fig. 5 zeigt eine weitere Fortbildung, bei der der zweite Teilbereich mit der Subwellenlängengitterstruktur wiederum im Subpixel 7R, 7G und 7B ausgebildet ist, welche ein Echtfarbenbild bei Betrachtung im Glanzwinkel bewirken.

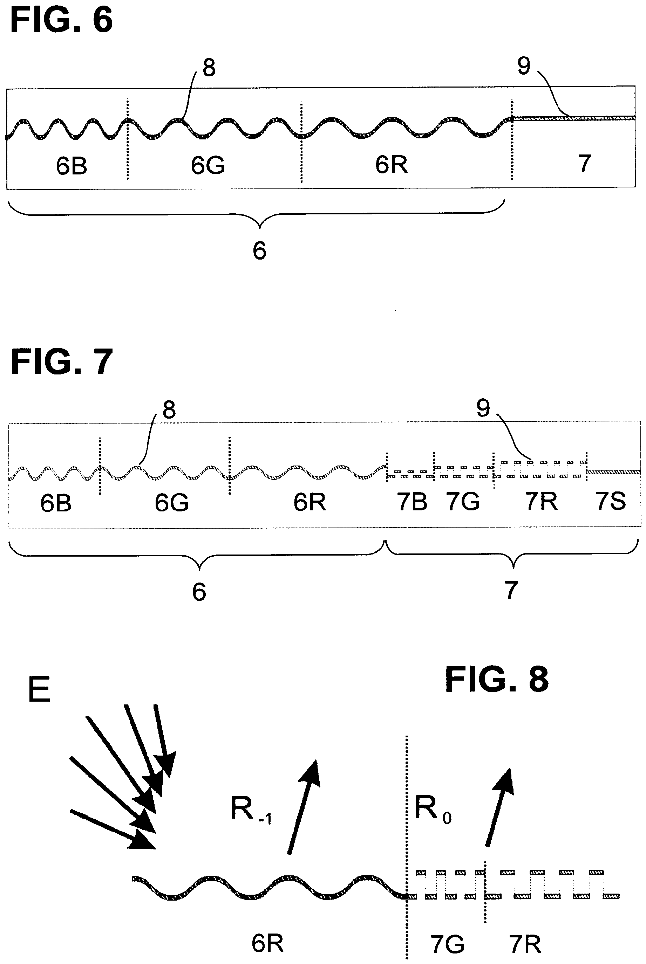

Die Fig. 6 und 7 zeigen in Schnittdarstellung einen Bereich eines exemplarischen Pixels 5. Figur 6 zeigt aber keinen dritten Teilbereich. Zu sehen ist, dass sich die Holgrammgitterstruktur 8 in den Subpixeln 6B, 6G und 6R des ersten Teilbereichs hinsichtlich einer Periode des verwendeten Sinusgitters unterscheidet. Dies ist nur exemplarisch zur Verdeutlichung. Es ist dem Fachmann bekannt, wie er Subpixel von Hologrammgitterstrukturen für Echtfarbenhologramme aufbauen muss. Der zweite Teilbereich 7 ist in Fig. 6 exemplarisch so ausgeführt, dass die Subwellenlängengitterstruktur 9 eine Mottenaugenstruktur ist. Sie stellt also hier nur einen Schwarzwert ein, der neben Rot, Grün und Blau als vierter Farbkanal verwendet wird und zudem eine Invertierung des Motivs beim Kippen verhindert.

Fig. 7 zeigt eine Schnittdarstellung durch ein Pixel 5. Wiederum ist die Hologrammgitterstruktur 8 durch Subpixel 6B, 6G und 6R aufgebaut. Zusätzlich ist der zweite Teilbereich 7 mit der Subwellenlängengitterstruktur 9 ebenfalls durch unterschiedlich geometrisch strukturierte Subpixel 7B, 7G und 7R sowie einer Mottenaugenstruktur 7S gestaltet.

Fig. 8 zeigt die Wirkung in den unterschiedlichen Teilbereichen des Pixels 5. Figur 8 zeigt aber keinen dritten Teilbereich.

Im ersten Teilbereich 6 ist die Hologrammgitterstruktur ausgebildet, im Beispiel der Fig. 8 als rotes Subpixel 6R. Einfallende Strahlung wird bei Betrachtung in der ersten Beugungsordnung R₋₁ farbig rot wahrgenommen. Für die Subwellenlängengitterstruktur gilt hingegen, dass die Betrachtung unter dem Glanzwinkel R₀ den Farbeindruck der Subwellenlängenstruktur liefert, hier von einem grünen Subpixel 7G und einem roten Subpixel 7R.

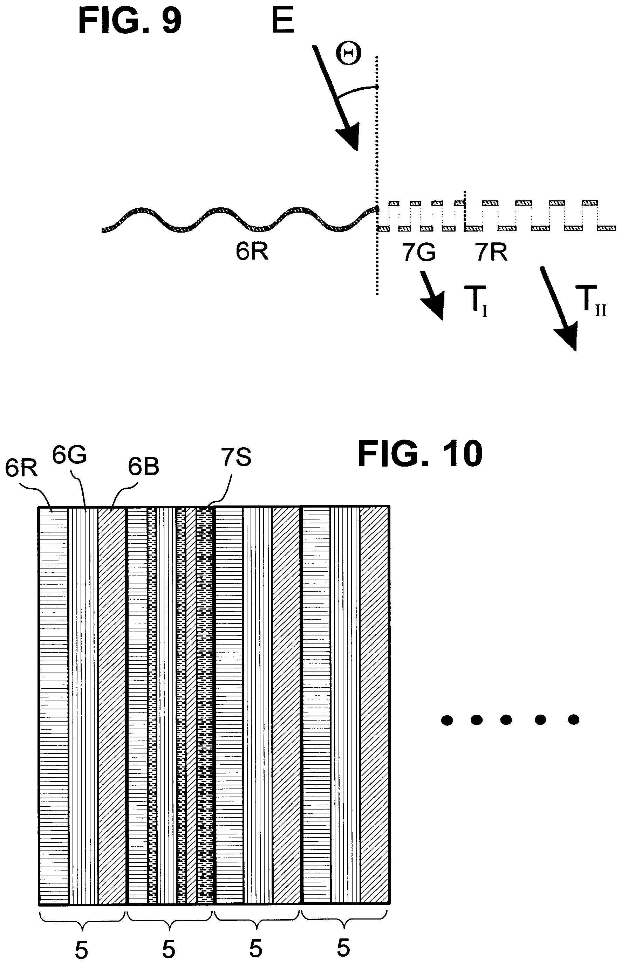

Fig. 9 zeigt dieselben Verhältnisse bei einer Variante, bei der die Subwellenlängenstruktur auch transmissiv wirkt. Figur 9 zeigt aber keinen dritten Teilbereich. Während im Bereich der Hologrammgitterstruktur keine merkliche Transmission stattfindet, ist im Bereich der Subwellenlängengitterstruktur eine farbige Transmission mit unterschiedlichen Farben T_{I} und T_{II} für die Subpixel 7G und 7R erreicht.

Fig. 10 zeigt ein weiteres Beispiel für Echtfarbenhologramme. Hier werden die Pixel 7 in Form von Streifen ausgebildet, die jeweils die einzelnen Subpixel in Form von Farbspuren 6R, 6G und 6B enthalten. Das linke Pixel 5 der Fig. 10 ist dabei so ausgebildet, dass die Subpixel das Pixel 5 vollständig mit Gittern füllen. Damit erscheinen die Farben in diesem Fall als Farbmischung mit maximaler Brillanz. Über die Breite und damit die Flächendeckung der Subpixel wird die Farbintensität geregelt. Dabei kann die Streifenbreite längs der Längserstreckung abnehmen, und die Streifen können auch unterbrochen sein. Nicht abgedeckte Bereiche, d.h. Bereiche des Pixels 5, in denen keine Hologrammstruktur in einem Subpixel 6R, 6G und 6B liegt, sind hier mit einer Subwellenlängenstruktur in Form einer Mottenaugenstruktur gefüllt. Diese Mottenaugenstruktur 7S ist exemplarisch für das zweite Pixel 5 von links in Fig. 10 eingetragen. Sie wirkt als lichtabsorbierende Struktur und besteht üblicherweise aus regelmäßig oder unregelmäßig angeordneten Erhöhungen oder Vertiefungen mit Perioden bzw. Quasiperioden, die kleiner sind als die Wellenlänge des sichtbaren Lichts. Ebenfalls geeignet sind lichtabsorbierende Mikrostrukturen, z.B. Mikrokavitäten, die über ein derart gestaltetes Aspektverhältnis verfügen, dass sie einfallendes Licht weitgehend absorbieren. Hierzu wird auf die DE 102013009972 A1, DE 102014004941 A1 und WO 2014/161673 A1 verwiesen, deren Mikrostrukturen in den Subpixel 7R, 7B, 7G oder 7S verwendet werden können. Nicht für die Farberzeugung benötigte Flächenbereiche der Pixel 5 werden also mit lichtabsorbierenden Strukturen aufgefüllt. Damit wird ein Umschlagen des Bildes vom Positiv ins Negativ verhindert, wenn man das Hologramm aus dem Winkel der ersten Beugungsordnung kippt, da ein spiegelnder Reflex des einfallenden Lichtes von den im Stand der Technik nicht mit holographischen Strukturen belegten Abschnitten der Pixel 5 unterbunden ist.

Dieser Ansatz kann auch dazu verwendet werden, das Bild in vier Farbkanälen, den Grundfarben Rot, Grün und Blau (bzw. den Grundfarben, die die Subpixel bereitstellen) sowie als viertem Kanal Schwarz zur Kontrastgebung aufzubauen.

Allgemein können auch andere Farben, auch in anderer Anzahl, zur Farbmischung verwendet werden, wobei auch in diesem Fall Schwarz als zusätzlicher Kanal zur Kontrastgebung eingesetzt wird.

Soweit vorliegend verschiedene Aufteilungen und Gestaltungen von Pixeln 5 beschrieben wurden, müssen diese Gestaltungen natürlich nicht in allen Pixeln eines Motivs 3 angewendet werden. Auch ist es möglich, verschiedene Optionen in der Erzeugung eines Motivs zu mischen.

### Bezugszeichenliste

- 1: Banknoten
- 2: Sicherheitselement
- 3: Motiv
- 4: Ausschnitt
- 5: Pixel
- 6: erster Teilbereich
- 6R, 6G, 6B: Subpixel
- 7: zweiter Teilbereich
- 7R, 7G, 7B: Subpixel
- 7E: glatter Bereich
- 7S: Mottenaugenstruktur
- 8: Hologrammgitterstruktur
- 9: Subwellenlängenstruktur
- E: einfallende Strahlung
- R₋₁: erste Beugungsordnung
- R₀: Glanzwinkel
- T_{I}: Transmission bei erster Farbe
- T_{II}: Transmission bei zweiter Farbe

## Patentansprüche

1. Sicherheitselement zur Herstellung von Wertdokumenten, wie Banknoten (1), Schecks oder dergleichen, das ein Prägehologramm aufweist, welches eine Vielzahl von Pixeln (5) aufweist, deren Fläche jeweils mindestens in einer Dimension mit dem unbewaffneten Auge nicht auflösbar ist, wobei
- die Fläche jedes dieser Pixel (5) einen ersten Teilbereich (6) und einen zweiten Teilbereich (7) aufweist,
- wobei der erste Teilbereich (6) aus einer Hologrammgitterstruktur (8) mit einer Periode von 500 nm bis 2,0 µm besteht und ausgebildet ist, bei Betrachtung in einer ersten Beugungsordnung (R₋₁) einen Hologrammeffekt des Pixels (5) zu bewirken, und
- wobei der zweite Teilbereich (7) aus einer Subwellenlängengitterstruktur (9) mit einer Periode von 150 nm bis 450 nm oder einer Mottenaugenstruktur oder einer lichtabsorbierenden Mikrostruktur besteht und ausgebildet ist, bei Betrachtung in einem Glanzwinkel (Ro) einen Farb- oder Hell/ Dunkel-Effekt des Pixels (5) zu bewirken,
**dadurch gekennzeichnet, dass**
mindestens einige der Pixel (5) einen dritten Teilbereich (7E) aufweisen, der entweder eine rein lichtabsorbierende Struktur oder der glatt und metallisch überzogen ist und dessen Flächenanteil eine Intensitätsanpassung des Pixels (5) im Glanzwinkel (Rθ) und in Transmission (TI, TII) bewirkt.

2. Sicherheitselement nach Anspruch 1, **dadurch gekennzeichnet, dass** der erste Teilbereich (6) aus mehreren Hologramm-Subpixeln besteht (6R, 6B, 6G), deren relative Flächenanteile eine Farbigkeit des Hologrammeffekts des Pixels (5) in der ersten Beugungsordnung festlegen, wobei die Pixel (5) des ersten Teilbereichs (6) in der ersten Beugungsordnung (R₋₁) ein Echtfarbenbild (3) bewirken.

3. Sicherheitselement nach einem der Ansprüche 1 bis 2, **dadurch gekennzeichnet, dass** für mindestens einige der Pixel (5) die Subwellenlängengitterstruktur (9) des zweiten Teilbereichs (7) als farbgebende Subwellenlängengitterstruktur ausgebildet ist.

4. Sicherheitselement nach Anspruch 3, **dadurch gekennzeichnet, dass** die zweiten Teilbereiche (7) jeweils aus mehreren Subwellenlängengitter-Subpixeln (7R, 7B, 7G) bestehen, die jeweils im Glanzwinkel (R_{θ}) eine Grundfarbe zeigen und deren relative Flächenanteile eine Farbigkeit oder Helligkeit des Pixels (5) im Glanzwinkel (Re) festlegen.

5. Sicherheitselement nach einer Kombination der Ansprüche 2 und 4, **dadurch gekennzeichnet, dass** die Pixel (5) bei Betrachtung in der ersten Beugungsordnung (R₋₁) und im Glanzwinkel (R_{θ}) ein Echtfarbenbild (3) darstellen.

6. Sicherheitselement nach einem der Ansprüche 1 bis 4, **dadurch gekennzeichnet, dass** die Subwellenlängengitterstruktur ausgebildet ist, bei Betrachtung in Transmission (T_{I}, Tu) einen Farb- oder Hell/Dunkel-Effekt des Pixels (5) zu bewirken.

7. Sicherheitselement nach einer Kombination der Ansprüche 5 und 6, **dadurch gekennzeichnet, dass** die Pixel (5) bei Betrachtung in Transmission (T_{I}, T_{II}) ein zum Echtfarbenbild (3) inverses Bild darstellen.

8. Sicherheitselement nach einem der Ansprüche 1 bis 7, **dadurch gekennzeichnet, dass** die lichtabsorbierende Mikrostruktur (7S) oder Mottenaugenstruktur einen Schwarzanteil des Pixels (5) im Glanzwinkel festlegt.

9. Sicherheitselement nach einem der vorigen Ansprüche, **dadurch gekennzeichnet, dass** die Pixel (5) streifenförmig ausgebildet sind, wobei die Hologramm-Subpixel (6R, 6B, 6G) ebenfalls streifenförmig sind und deren Breite die Farbigkeit einstellt.

10. Sicherheitselement nach Anspruch 9, **dadurch gekennzeichnet, dass** Bereiche der Pixel (5), in denen keine Hologrammstruktur liegt, mit lichtabsorbierenden Strukturen, bevorzugt Mottenaugenstrukturen oder lichtabsorbierenden Mikrostrukturen gefüllt sind.

11. Sicherheitselement nach einem der Ansprüche 1 bis 10, **dadurch gekennzeichnet, dass** das Prägehologramm in ein transparentes Dielektrikum eingebettet ist.

12. Wertdokument, wie Banknote (1), Schecks oder dergleichen, das ein Sicherheitselement nach einem der Ansprüche 1 bis 11 aufweist.

13. Verfahren zur Herstellung eines ein Sicherheitselementes zur Herstellung von Wertdokumenten, wie Banknoten (1), Schecks oder dergleichen, **dadurch gekennzeichnet, dass** in ein Substrat eine Prägestruktur geprägt und diese metallisiert wird, welche aus einer Vielzahl von Pixeln (5) nach einem der Ansprüche 1 bis 11 aufgebaut ist.

## Claims

1. A security element for manufacturing documents of value, as banknotes (1), checks or the like, comprising an embossed hologram having a plurality of pixels (5), the area of which cannot be resolved with the unaided eye regarding at least one dimension, wherein
- the area of each pixel (5) comprises a first partial region (6) and a second partial region (7),
- wherein the first partial region (6) is constituted by a hologram grid structure (8) having a period from 500 nm to 2,0 µm and being adapted to effect a hologram effect of the pixel (5) when viewed in a first diffraction order (R₋₁), and
- wherein the second partial region (7) is constituted by a sub-wavelength grid structure (9) having a period from 150 nm to 450 nm or by a moth eye structure or a light absorbing microstructure, and is provided to effect a color effect or a light/ dark effect of the pixel (5) when viewed under a glazing angle (Ro)
**characterized in, that**
at least some of the pixels (5) comprise a third partial region (7E) which is either a purely light absorbing structure or is overcast is smooth and metallic manner, wherein an area portion of the third partial region effects an intensity adjustment of the pixel (5) under the glazing angle (Rθ) and in transmission (TI, TII).

2. The security element according to claim 1, **characterized in, that** the first partial region (6) is constituted by several hologram subpixels (6R, 6B, 6G) whose relative area portions define a colorfulness of the hologram effect of the pixel (6) in the first diffraction order, wherein the pixel (5) of the first partial region (6) effect a full color image (3) in the first diffraction order (R₋₁).

3. The security element according to claims 1 or 2, **characterized in, that** the sub-wavelength grid structure (9) of the second partial region (7) is provided as coloring sub-wavelength grid structure for at least some of the pixels (5).

4. The security element according to claim 3, **characterized in, that** the second partial regions (7) are constituted each by several sub-wavelength grid subpixels (7R, 7B, 7G) each showing a basic color under the glazing angle (R_{θ}) and whose relative area portions define a colorfulness or a lightness of the pixel (5) under the glazing angle (R_{θ}).

5. The security element according to a combination of claims 2 and 4, **characterized in, that** the pixels (5) provide a full color image (3) when viewed in the first diffraction order (R₋₁) and under the glazing angle (R_{θ}).

6. The security element according any of claims 1 through 4, **characterized in, that** the sub-wavelength grid structure is configured to effect a color effect or a light/ dark effect of the pixel (5) when viewed in transmission (T_{I}, T_{II}).

7. The security element according to a combination of claims 5 and 6, **characterized in, that** the pixels (5) provide an image inverse to the full color image (3) when viewed in transmission (T_{I}, T_{II}).

8. The security element according to any of claims 1 through 7, **characterized in, that** the light absorbing microstructure (7S) or moth eye structure defines a black content of the pixel (5) under the glazing angle.

9. The security element according to any of the above claims, **characterized in, that** the pixels (5) are formed in shape of strips, wherein the hologram subpixels (6R, 6B, 6G) are equally in form of strips with their widths defining the colorfulness.

10. The security element according to claim 9, **characterized in, that** regions of the pixels (5) in which no hologram structure is provided, are filled by light absorbing structures, in particular moth eye structures or light absorbing microstructures.

11. The security element according to any of claims 1 through 10, **characterized in, that** the embossed hologram is embedded in a transparent dielectricum.

12. A document of value, as banknote (1), checks or the like, comprising a security element according to any of claims 1 through 11.

13. A method for manufacturing a security element for manufacturing documents of value, as banknotes (1), checks or the like, **characterized in, that** an embossed structure is embossed into a substrate and metalized, wherein the structure is composed by a multitude of pixels (5) according to any of claims 1 through 11.

## Revendications

1. Élément de sécurité servant à réaliser des documents de valeur tels que des billets de banque (1), des chèques ou similaires, lequel comporte un hologramme estampé qui possède une pluralité de pixels (5) dont la surface respective n'est pas résoluble à l'œil nu dans au moins une dimension, dans lequel
- la surface de chacun desdits pixels (5) comporte une première zone partielle (6) et une deuxième zone partielle (7),
- dans lequel la première zone partielle (6) se compose d'une structure de réseau holographique (8) présentant une période de 500 nm à 2,0 µm, et est conçue pour provoquer un effet holographique du pixel (5) lors d'une observation dans un premier ordre de diffraction (R₋₁), et
- dans lequel la deuxième zone partielle (7) se compose d'une structure de réseau sub-longueur d'onde (9) présentant une période de 150 nm à 450 nm ou d'une structure en œil de mite ou encore d'une microstructure absorbant la lumière, et est conçue pour produire un effet de coloration ou clair/obscur du pixel (5) lors d'une observation sous un angle de Bragg (R₀),
**caractérisé en ce qu'**au moins certains des pixels (5) comportent une troisième zone partielle (7E) qui présente soit une structure absorbant purement la lumière, soit une structure lisse et métallisée, et dont la partie de surface produit une adaptation d'intensité du pixel (5) sous l'angle de Bragg (Rq) et dans la transmission (TI, TII).

2. Élément de sécurité selon la revendication 1, **caractérisé en ce que** la première zone partielle (6) se compose d'une pluralité de sous-pixels holographiques (6R, 6B, 6G) dont les rapports de surface relatifs établissent une chromaticité de l'effet holographique du pixel (5) dans le premier ordre de diffraction, dans lequel les pixels (5) de la première zone partielle (6) produisent une image en couleurs réelles (3) dans le premier ordre de diffraction (R₋₁).

3. Élément de sécurité selon l'une des revendications 1 à 2, **caractérisé en ce que**, pour au moins une partie des pixels (5), la structure de réseau sub-longueur d'onde (9) de la deuxième zone partielle (7) est réalisée sous la forme d'une structure de réseau sub-longueur d'onde produisant une couleur.

4. Élément de sécurité selon la revendication 3, **caractérisé en ce que** les deuxièmes zones partielles (7) se composent respectivement d'une pluralité de sous-pixels (7R, 7B, 7G) de réseaux sub-longueur d'onde qui présentent respectivement une couleur de base sous l'angle de Bragg (R_{q}) et dont les rapports de surface relatifs définissent une chromaticité ou une luminosité du pixel (5) sous l'angle de Bragg (R_{q}).

5. Élément de sécurité selon une combinaison des revendications 2 et 4, **caractérisé en ce que** les pixels (5) représentent une image en couleurs réelles (3) dans le premier ordre de diffraction (R₋₁) et sous l'angle de Bragg (R_{q}).

6. Élément de sécurité selon l'une des revendications 1 à 4, **caractérisé en ce que** la structure de réseau sub-longueur d'onde est conçue pour produire un effet de coloration ou clair/obscur du pixel (5) lors d'une observation en transmission (T_{I}, T_{II}).

7. Élément de sécurité selon une combinaison des revendications 5 et 6, **caractérisé en ce que** les pixels (5) représentent une image inverse de l'image en couleurs réelles (3) lors d'une observation en transmission (T_{I}, T_{II}).

8. Élément de sécurité selon l'une des revendications 1 à 7, **caractérisé en ce que** la microstructure absorbant la lumière (7S) ou la structure en œil de mite établit un contenu noir du pixel (5) sous l'angle de Bragg.

9. Élément de sécurité selon l'une des revendications précédentes, **caractérisé en ce que** les pixels (5) sont réalisés sous forme de bande, dans lequel les sous-pixels holographiques (6R, 6B, 6G) présentent également une forme de bande et leur largeur définit la chromaticité.

10. Élément de sécurité selon la revendication 9, **caractérisé en ce que** des zones des pixels (5) dans lesquelles ne se trouve aucune structure holographique sont remplies de structures absorbant la lumière, de préférence des structures en forme d'œil de mite ou des microstructures absorbant la lumière.

11. Élément de sécurité selon l'une des revendications 1 à 10, **caractérisé en ce que** l'hologramme estampé est noyé dans un diélectrique transparent.

12. Document de valeur, tel que des billets de banque (1), des chèques ou similaires, qui comporte un élément de sécurité selon l'une des revendications 1 à 11.

13. Procédé de réalisation d'un élément de sécurité pour la réalisation de documents de valeur tels que des billets de banque (1), des chèques ou similaires,
**caractérisé en ce qu'**une structure estampée est estampée dans un substrat et **en ce que** cette dernière est métallisée, laquelle structure estampée est composée d'une pluralité de pixels (5) selon l'une des revendications 1 à 11.
